# EUROPEAN PATENT SPECIFICATION

(11) **EP 0 586 253 B1**
(45) Date of publication and mention of the grant of the patent: **20.05.1998**
(21) Application number: 93306958.5
(22) Date of filing: 02.09.1993
(51) Int. Cl.: G11B 20/10, G11B 20/18

(54) **Optimum recording/reproducing apparatus**
Optimalaufzeichnungs-/-wiedergabegerät
Appareil d'enregistrement/de reproduction optimum

(30) Priority: 02.09.1992 KR 9215934
(43) Date of publication of application: 09.03.1994
(73) Proprietor: SAMSUNG ELECTRONICS CO., LTD., Suwon-city, Kyungki-do 441-373 (KR)
(72) Inventor: Choi, Kyung-hwan, Suwon-city, Kyungki-do (KR)
(74) Representative: Stanley, David William

(56) References cited:
- EP-A- 0 267 035
- FR-A- 2 486 272
- GB-A- 2 017 557
- GB-A- 2 194 851
- US-A- 4 908 811

## Description

The present invention relates to recording and reproducing apparatus for recording and reproducing picture and sound data, and more particularly, to an optimum recording and reproducing apparatus capable of optimally performing the recording and reproducing of the data according to changes in the recording and reproducing environments.

In general, when recording and reproducing picture and sound data, the data is recorded in digital form onto a recording medium such as magnetic tape or a magnetic disk, and the thus-recorded data is reproduced so as to restore the original image and sound. In recording and reproducing of the image and sound data via a predetermined recording medium, there have been provided consistent attempts for increasing the quantity of data which can be stored on the limited size of medium as well as securing better picture and sound qualities without degradation thereof.

GB-A-2,107,557 discloses a coding system for recording and recovering digital audio. The digitized analog signal is time-compressed into successive segments of predetermined duration. Synchronizing signals are interspersed between successive segments. The digitized, time-compressed signal is encoded with an error correcting code. Prescribed segments are replaced by auxiliary digital information, such as frame identification signals. In a playback apparatus, the demodulated signal is applied to a time base correction circuit which compares the subcarrier burst frequency against a stable oscillator and produces a control signal responsive to the difference in frequencies. The control signal is used to move the pickup head along a record groove to maintain the desired relative head/disc velocity. The clock frequency is retrieved from the recording medium and used in demodulating the data.

A conventional digital recording and/or reproduction apparatus is designed to record and reproduce the data while basically fixing the recording rate, error correction capability and the compression ratio at constant values. This, however, prevents the achievement of optimum recording and reproducing since picture and sound quality is easily influenced by the recording medium's characteristics, set apparatus capability, etc.

Moreover, even if a high-quality head, which is the most important component of a data recording and reproducing apparatus, is well-manufactured and a magnetic tape for use therewith is manufactured of consistent quality, and if the set apparatus are made equal and manufactured through an identical production line, thousands or tens of thousands of head sets would not have the same capability. Therefore, even if the same picture and sound data are recorded or reproduced, the same sound or picture quality cannot be obtained consistently. Accordingly, the choice of which set apparatus and tapes are used may cause differences in picture and sound quality, and may cause the degradation of picture and sound qualities.

The above-described problems will be explained with reference to Figures 1 through 5 of the accompanying diagrammatic drawings, which show actual experimental data. In Figures 1 to 7 of the accompanying diagrammatic drawings:
Figure 1 shows a relationship between the distance between head and tape of a given recording and/or reproducing apparatus and the reproduction output;
Figure 2 is a diagram showing a relationship between tape type and the reproduction output;
Figure 3 is a diagram showing the relationship between the thickness of the body of a magnetic tape and the reproduction loss;
Figures 4A, 4B and 4C are diagrams showing the relationship between the recording current and the reproduction characteristics;
Figures 5A, 5B and 5C are diagrams showing the relationship between the recording bit rate and the reproduction characteristics;
Figure 6 is a schematic block diagram showing the conventional digital signal recording apparatus; and
Figure 7 is a schematic block diagram showing the conventional digital signal reproducing apparatus.

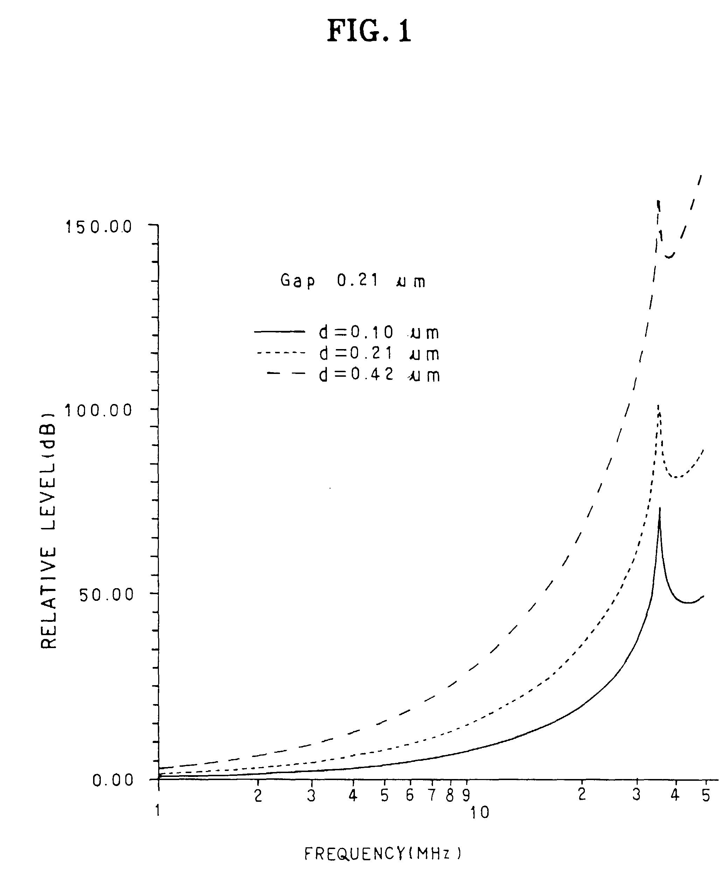

Figure 1 illustrates the relationship between the distance between the head of set apparatus and the recording medium, i.e. the tape, and the reproduced output. Referring to Figure 1, as the distance between head and tape decreases, the reproduced output increases. Thus, it should be noted that even if a plurality of set apparatus are made almost identically to one another, minute changes in the distance between head and tape produce differences in the reproduced output.

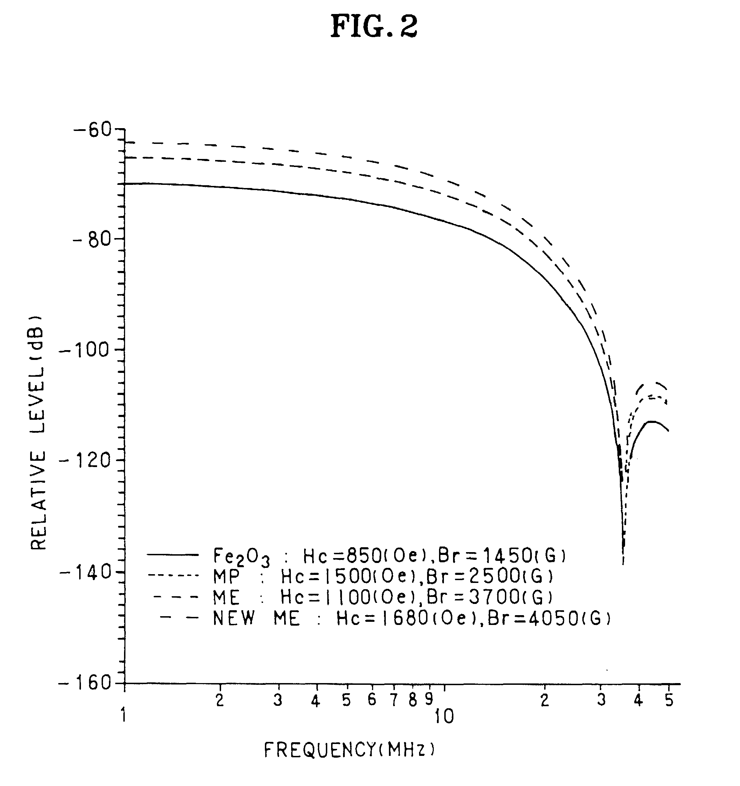

Figure 2 is a diagram showing the relationship between the tape type and the reproduction output. Referring to Figure 2, tape NEW ME, which has the components of Hc=1680(0e) and Br=4050(0e), exhibits the best characteristics. Accordingly, it should be noted that when the recording and/or reproduction is performed by a given apparatus, the reproduction output differs according to the composition of the tape on which the data is recorded.

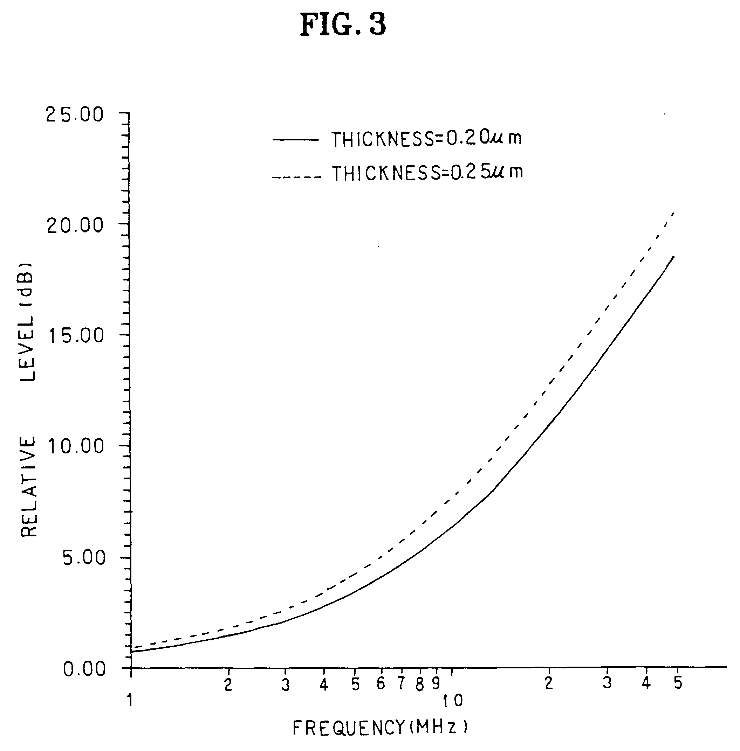

Figure 3 is a diagram showing the relationship between the thickness of the body of the magnetic tape and reproduction loss. In Figure 3, the difference of reproduction loss is shown for thicknesses of 0.20µm and 0.25µm, with less reproduction loss being attained when the body of the magnetic tape is 0.20µm thick. That is, a thinner tape dimension reduces reproduction loss.

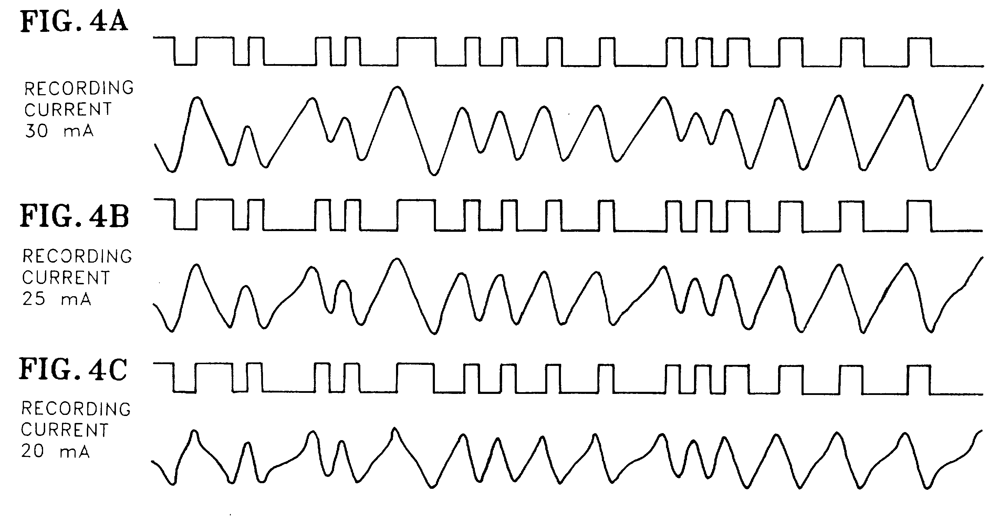

Figures 4A, 4B and 4C show the relationship between the recording current and the reproduction characteristic. Here, it is noted that for the same recording signal, even small changes in recording current produce different reproduction characteristics.

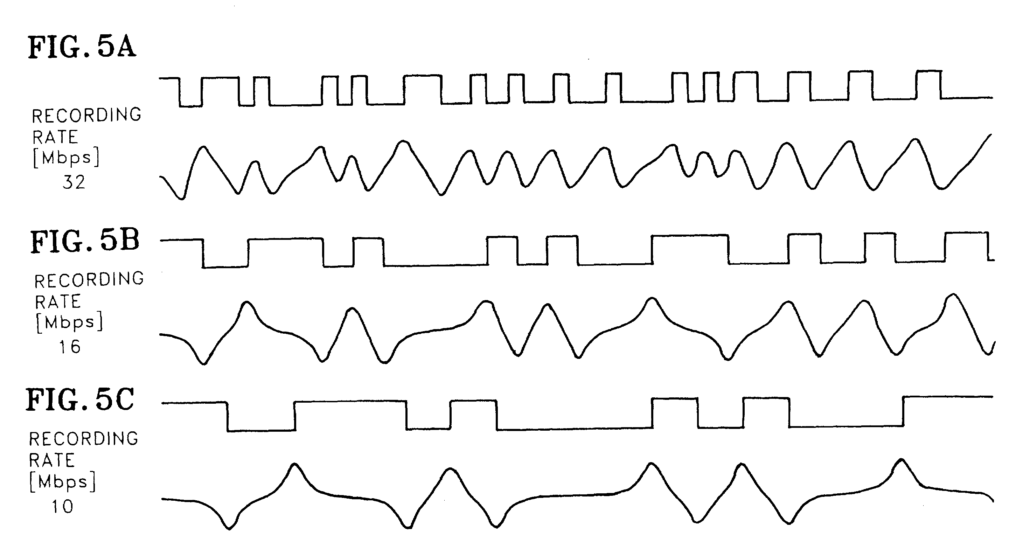

Figures 5A, 5B and 5C show the relationship between the recording bit rate and the reproduction characteristic. A lower recording bit rate results in better reproduction characteristics. The characteristics are variable according to the kind of tape, the head's capability, and the performance of recording current.

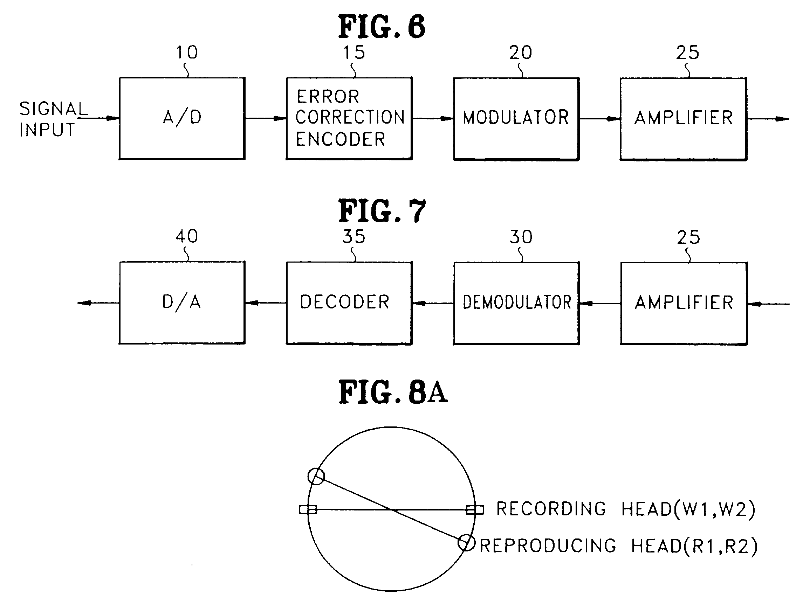

The operation of the conventional digital signal recording and/or reproducing apparatus (without consideration of the specific characteristics of the tape, head, set apparatus, etc.), will be briefly described with reference to Figures 6 and 7.

Figure 6 is a block diagram illustrating the conventional digital recording apparatus. Referring to Figure 6, reference numeral 10 denotes an analog-to-digital (A/D) converter for converting an analog signal into digital form, 15 denotes an error correction encoder for error-correction, 20 denotes a modulator for modulating the data to be adapted for the channel characteristic, and 25 denotes an amplifier for amplifying the data signal to the proper amplitude for being recorded onto the recording medium. Audio data is in analog form and is therefore converted into the form of a digital signal via A/D converter 10. The converted data is input to error correction encoder 15 for detecting and correcting errors. As for the error correction encoder, in general, a Reed Solomon (RS) coder is adopted. The error-corrected data is modulated by modulator 20 to be suitable for the channel characteristic thereof. That is, if the digital data is communication data, the data is frequency modulated into a communication frequency band. Also, if the data is to be recorded on a recording medium, e.g. magnetic tape, the data is modulated into a frequency band suitable for recording. Accordingly, the digital data which is modulated adaptively for a specific channel's characteristics is amplified to the proper amplitude by amplifier 25, so as to be recorded on the recording medium.

Figure 7 is a schematic block diagram showing the conventional digital reproducing apparatus. Referring to Figure 7, reference numeral 25 denotes an amplifier for performing the same function as that of Figure 6, 30 denotes a demodulator for performing the inverse procedure of the modulation performed in the above recording process, 35 denotes a decoder for decoding the input data, and 40 denotes a digital-to-analog (D/A) converter for converting a digital signal into an analog signal. The digital signal reproducing apparatus as shown in Figure 7 reproduces the picture or sound digital data from the recording medium, using the head, then receives the reproduced data via amplifier 25, to thereby amplify the data up to a predetermined amplitude. The thus-amplified signal enters demodulator 30 and thereby undergoes a demodulation process which is the inverse of that performed during recording, to be demodulated. The thus-demodulated data is error-detected and error-corrected by error correction decoder 35. As for error correction decoder 35, a viterbi decoder or RS decoder can be adopted. The error-corrected picture or sound digital data is converted into analog form by D/A converter 40, and then transmitted to a display device and speaker or the like, for being output as a picture with sound.

The conventional digital recording and/or reproducing apparatus shown in Figures 6 and 7 performs the recording and reproducing of data while fixing the data recording rate and track length, and therefore degrades picture and sound quality according to differences in the recording medium's characteristics and variations in the system's capability.

Also, as most electrical and electronic products are mass-produced, even the consistent use of a particular head type, recording medium (i.e. tape), and recording and/or reproducing apparatus cannot guarantee constant recording and reproduction quality. That is, a user may employ tapes manufactured with various substances, such that data cannot be recorded on the recording medium at the optimum condition and the recorded data cannot be reproduced under optimum conditions. Accordingly, the sound and picture quality is unavoidably degraded.

Preferred embodiments of the present invention aim to provide an optimum recording and/or reproducing apparatus for recording and reproducing picture and sound data under optimum conditions, regardless of the substance constituting the recording medium or the capability of a given system.

Another aim is to provide an optimum recording and/or reproducing apparatus for recording and reproducing picture and sound data from a predetermined recording medium under optimum conditions, by compressing the data-to-be-recorded at the optimum compression ratio and expanding the thus-compressed data at the optimum expanding ratio so as to be reproduced.

According to one aspect of the present invention, there is provided an optimum recording and reproducing apparatus comprising a reproducing apparatus comprising a detector for detecting a recorded signal from a signal; a phase-locked loop (PLL) circuit for detecting a reproduced clock signal from the output signal of said detector; a demodulator for demodulating detected data from said detector according to the reproduction clock signal output from said PLL circuit, according to the channel characteristics; and a memory for temporarily storing therein the data provided by said demodulator and outputting the stored data according to the clock signal provided by said PLL circuit in which the apparatus is for recording digital data on a predetermined recording medium by using a recording head and reproducing and outputting the recorded data by using a reproducing head, characterised by comprising:
a recording apparatus comprising a memory for storing an input digital signal; a modulator for modulating read-out data from said memory according to predetermined clock signal and channel characteristics, so as to be supplied to said recording head; envelope detecting means for detecting an envelope value from the just recorded data signal reproduced by said reproducing head simultaneously while recording the data signal on a recording medium by using said recording head; and clock generating means for generating a clock signal whose frequency varies according to the detected result from said envelope detecting means, whereby the rate of reading out of data from said memory and the modulating clock signal applied to said modulator are determined according to said clock signal; and
the signal from which said recorded signal is detected is reproduced by said reproducing head.

An optimum recording and reproducing apparatus as above may further comprise switching means for switching the reproduction output via said reproducing head to said recording apparatus or said reproducing apparatus according to a data recording operation or a data reproducing operation.

According to another aspect of the present invention, there is provided an optimum recording and reproducing apparatus comprising a reproducing apparatus comprising a detector for detecting a recorded signal from a reproduction signal which is reproduced by said reproducing head; a PLL circuit for detecting a reproduced clock signal from the signal output from said detector; a demodulator for demodulating the data detected by said detector according to channel characteristics, according to the reproducing clock signal output from said PLL circuit in which the apparatus is for recording digital data on a predetermined recording medium by using a recording head, and reproducing the recorded data by using a reproducing head, the apparatus, characterised by comprising:
a recording apparatus comprising a data compressor for compressing the data to be recorded by a predetermined compression ratio; an error correction encoder for detecting the error of said compressed data, to thereby perform error-correction according to a predetermined error correction capability; a modulator for modulating said error-corrected data according to predetermined clock and channel characteristics, to be supplied to the reproducing head; envelope detecting means for detecting an envelope value from the just recorded data signal reproduced by using said reproducing head simultaneously while recording the data signal on a recording medium by using said recording head; recording controlling means for determining reference clock, error correction capability and data compression ratio which are to be supplied to said modulator, said data compressor and said error correction encoder, according to the detected result from said envelope detecting means and an error flag produced by said error correction decoder; an identification (ID) generator for receiving information from said recording controlling means so as to be recorded in the input data; and a mixer for mixing the ID signal from said ID generator with the data from said data compressor, to thereby produce a mixing result to said error correction encoder; and
an ID detector for detecting the ID signal from among said demodulated data; an error correction decoder for performing error-correction-decoding according to said detected ID signal from said ID detector; and a data expander for expanding the decoded signal by a predetermined expansion ratio which corresponds to the ID signal detected from said ID detector.

An optimum recording and reproducing apparatus as above may further comprise a supplementary recording signal detecting head for recording the data signal and simultaneously detecting the recorded data.

Preferably, said envelope detecting means produces an envelope value corresponding to the absolute value of difference between the upper and lower limits of the data read out and transferred by said reproducing head during recording.

Preferably, said recording controlling means comprises clock generating means for generating a clock signal whose frequency varies according to the compared result from said envelope detecting means; an error counter for counting the error flags from said error correction decoder; an error correction controller for receiving the clock signal from said clock generating means and the error count value from said error counter, to thereby control the error correction capability; and a compression ratio controller for controlling the compression ratio according to the clock signal from said clock generating means and the error correction capability set by said error correction controller.

Preferably, said clock generating means comprises an integrator for integrating the detected output from said envelope detecting means; a comparator for comparing the detected output from said envelope detecting means with the integrated output from said integrator; and a voltage controlled oscillator for producing a clock signal which is varied with the compared result output from said comparator.

Preferably, said clock generating means comprises an integrator for integrating the output detected from said envelope detecting means; a comparator for comparing the detected output from said envelope detecting means with the integrated output from said integrator; a serial-to-parallel converter for converting the output of said comparator into parallel data; a plurality of comparators for comparing the data constituting said parallel data with said predetermined reference values, respectively; and a plurality of clock generators for generating the clock signal according to said compared result.

Preferably, said error correction controller comprises a comparator for comparing the count value of said error counter with said predetermined reference value; and an up/down counter for up/down-counting a predetermined reference parity value according to said compared result.

Preferably, said compression ratio controller comprises a comparator for comparing the value of said error correction controller with said predetermined reference value; and an up/down counter for up/down-counting a predetermined reference compression ratio in inverse proportion to said compared result.

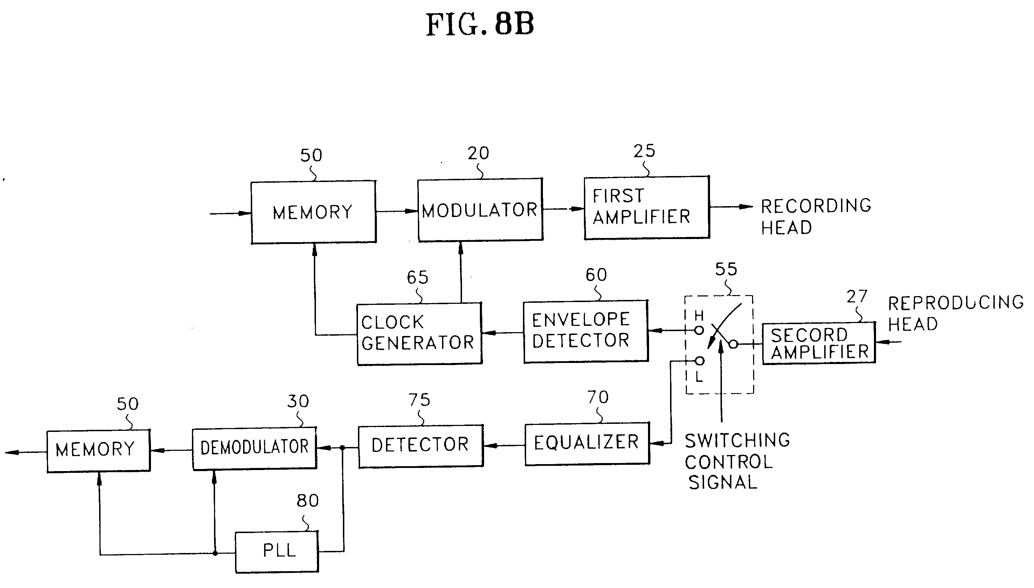

For a better understanding of the invention, and to show how the same may be carried into effect, reference will now be made, by way of example, to Figures 8 to 17 of the accompanying diagrammatic drawings, in which:
Figures 8A and 8B is a schematic block diagram showing an embodiment of an optimum recording and/or reproducing apparatus according to the present invention;

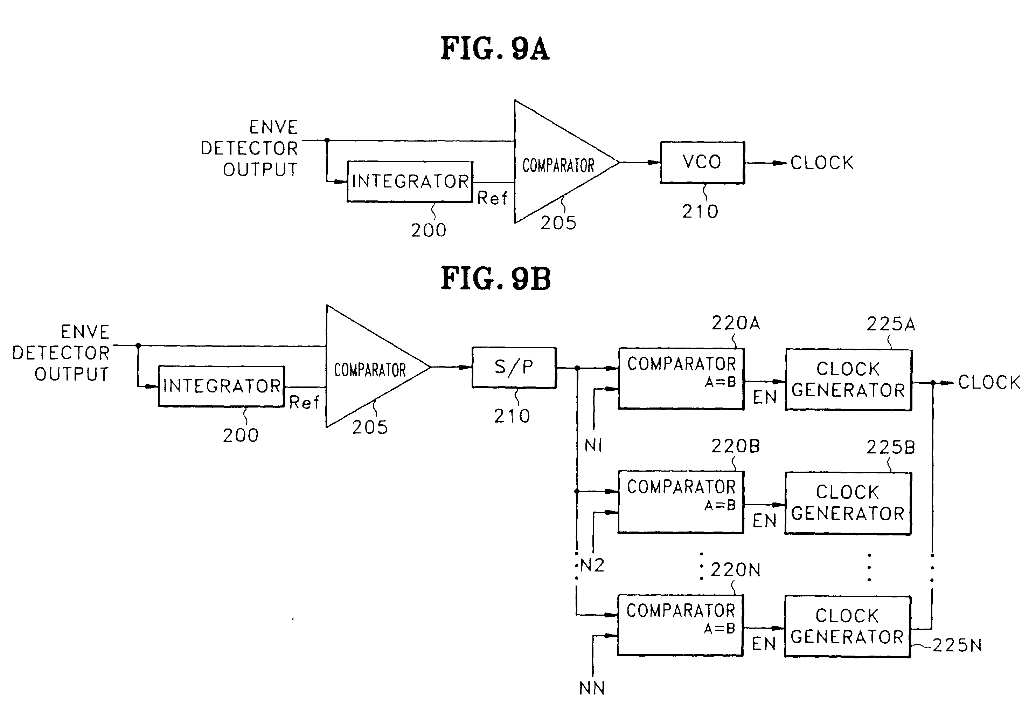

Figures 9A and 9B is a detailed circuit diagram showing a clock generator used in an optimum recording and/or reproducing apparatus according to the present invention;

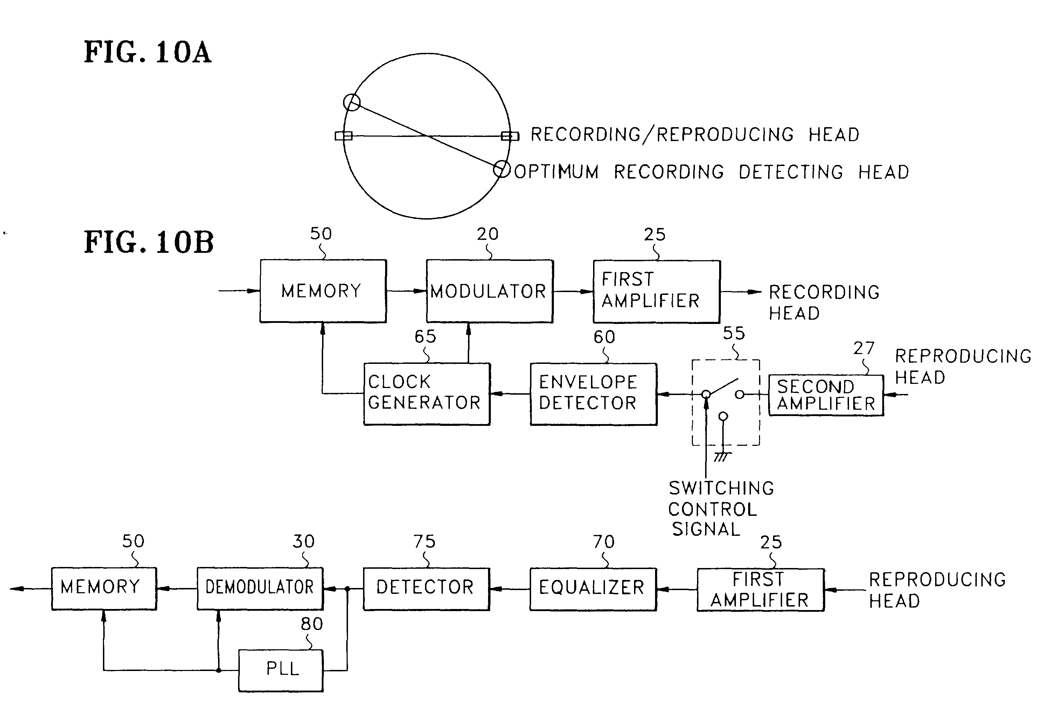

Figures 10A and 10B are schematic diagrams showing another embodiment of an optimum recording and/or reproducing apparatus according to the present invention.

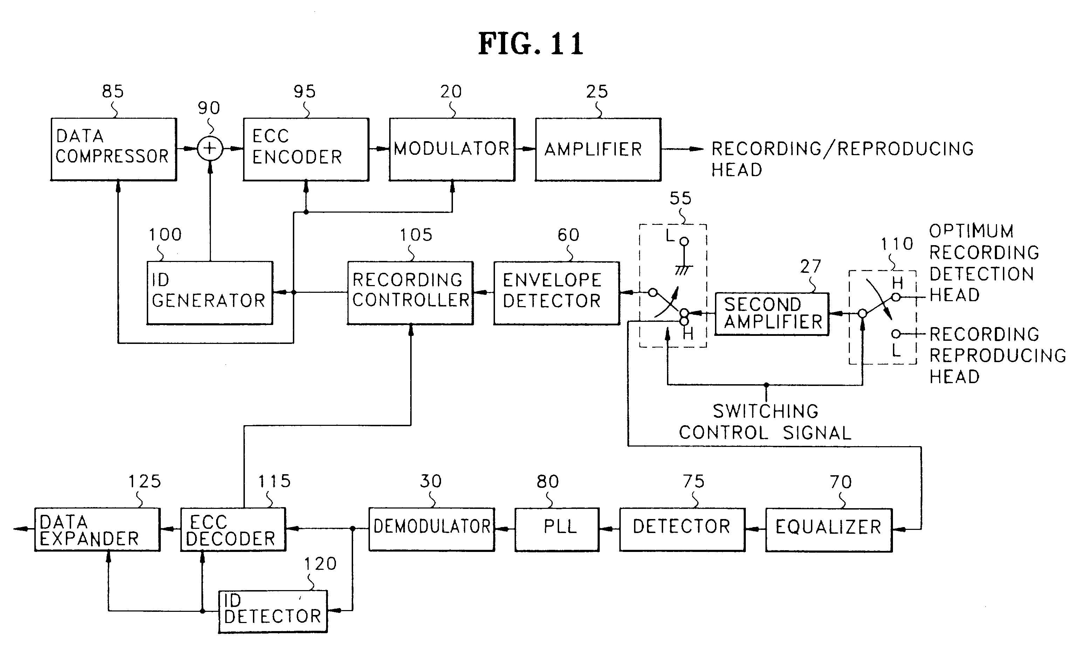

Figure 11 is a block diagram showing still another embodiment of an optimum recording and/or reproducing apparatus according to the present invention;

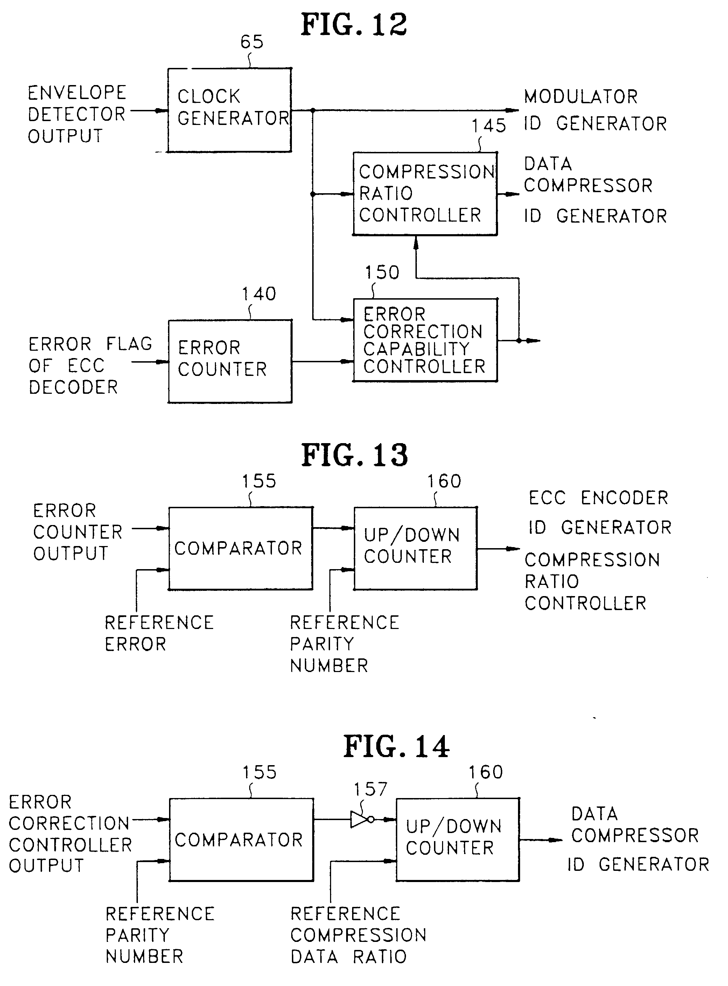

Figure 12 is a detailed block diagram showing a recording controller of Figure 11;
Figure 13 is a detailed block diagram showing an error correction controller Figure 12;
Figure 14 is a diagram showing a compression ratio controller of Figure 12;

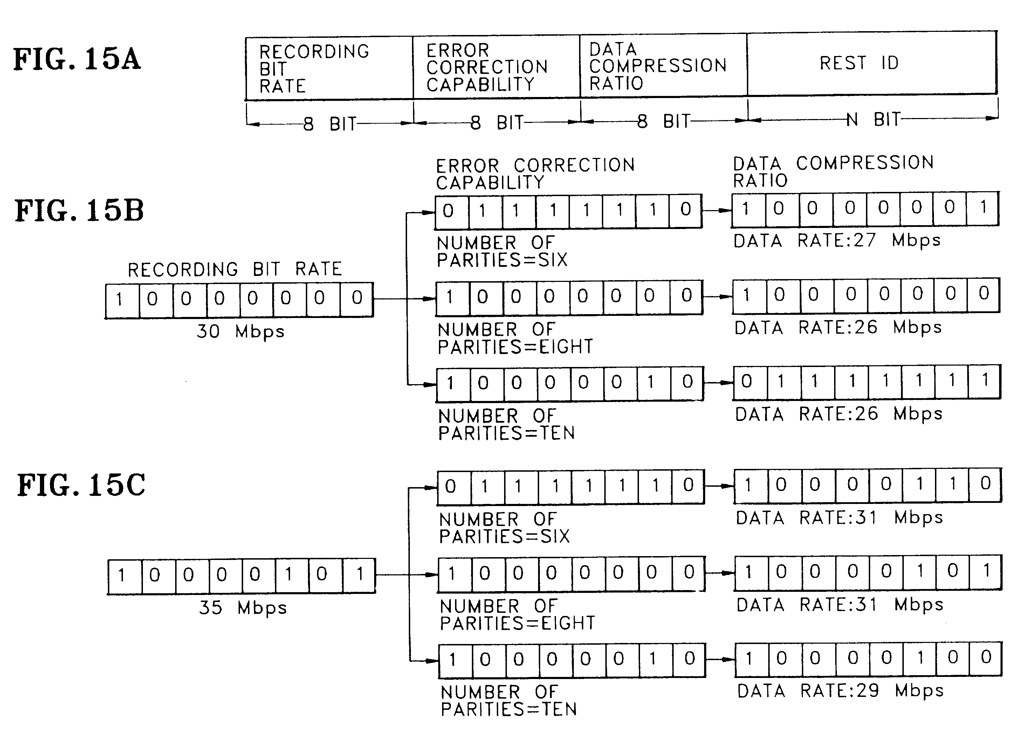

Figures 15A, 15B and 15C are diagrams showing the construction of an identification (ID) code and its embodiment;

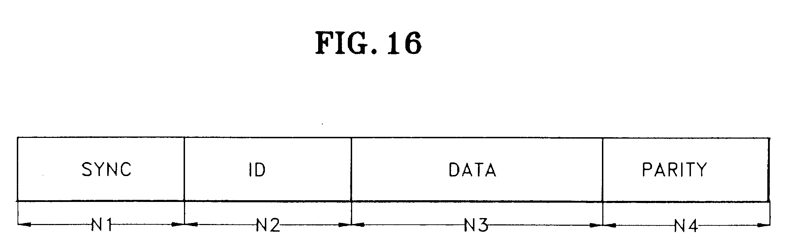

Figure 16 is a diagram showing the construction of a synchronization block; and

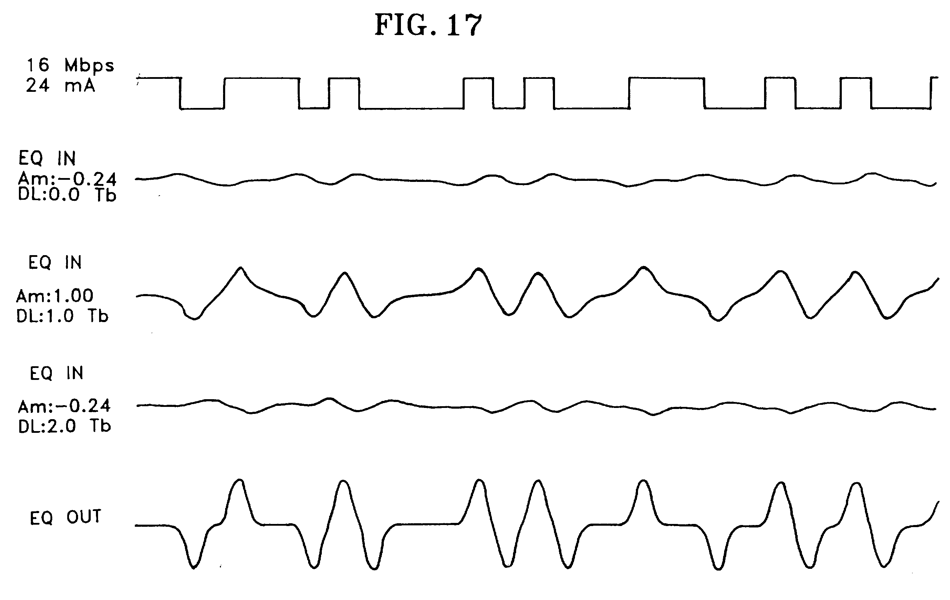

Figure 17 is a diagram showing an example of an output waveform in an embodiment of the present invention.

In the figures, like reference numerals denote like or corresponding parts.

Figure 8A briefly illustrates the example of a head which is adopted in an embodiment of the present invention. The head is designed so as to comprise recording heads W1 and W2 for conventional recording and reproduction, and reproducing head R1 and R2 for reproduction, separately.

Figure 8B is a block diagram illustrating an embodiment of the optimum recording and/or reproducing apparatus. Here, when performing the recording and reproduction, a recording and/or reproducing head as shown in Figure 8A is used. Referring to Figure 8B, modulator 20, first and second amplifiers 25 and 27, and demodulator 30 perform the same functions as those of the conventional digital signal recording and/or reproducing apparatus shown in Figures 6 and 7. Reference numeral 50 denotes a memory for temporarily storing an input digital recording signal therein, 55 denotes a switch for switching to recording or reproduction, 60 denotes an envelope detector for detecting the envelope of the signal detected from the optimum recording detecting head, 65 denotes a clock generator for generating a clock signal whose period is varied according to the amplitude of the input signal, 70 denotes an equalizer, 75 denotes a detector, and 80 denotes a phase-locked loop (PLL).

Hereinafter, as an embodiment of the present invention, the operation of an optimum recording and/or reproducing apparatus constructed as described above will be described.

First of all, an operation of recording the data at an optimum state is described.

The picture and/or sound digital data which are to be recorded are input via an input terminal, so as to be recorded in a memory 50. The recorded data is output from memory 50, according to the predetermined reference clock signal which is generated from clock generator 65. The output data is modulated in accordance with the channel characteristics and amplified to a predetermined magnitude suitable for recording by means of first amplifier 25. This amplified data is transmitted to the recording head, so as to be recorded on the recording medium.

For the data recording, the data is recorded, and simultaneously, the recorded data is reproduced by reproducing heads R1 and R2. A switch 55 is connected to node H, according to the switching control signal from a microcomputer (not shown), and the amplified signal is transferred to an envelope detector 60 via switch 55. Envelope detector 60 detects the envelope value of the amplified digital signal. At this moment, the detected value corresponds to the absolute value of the difference between the upper and lower bounds of the data which is input to the envelope detector.

Envelope detector 60 provides clock generator 65 with the envelope value, and thereby the clock rate of the clock generator is changed according to the envelope value. That is, if the detected envelope value is less than the reference value, the clock rate of clock generator 65 is changed to increase the envelope value. On the contrary, if the envelope value is greater than the reference value, the clock rate of clock generator 65 is changed to decrease the envelope value. The construction and operation of the clock generator which functions as described above will be hereinafter described, with reference to Figure 9.

Referring to Figure 9A, clock generator 65 (Figure 8B) comprises an integrator 200, a comparator 205 and a voltage controlled oscillator (VCO) 210. The clock generator receives the output of envelope detector 60, and compares the integrated signal of integrator 200 with the unintegrated signal at comparator 205. Next, according to the comparing result, the operation of VCO 210 is controlled. In other words, a greater envelope value leads to the generation of a faster clock, and a smaller envelope value leads to the generation of a slower clock, which thereby maintains the recording clock for determining the rate of data recording at an optimum state.

Referring to Figure 9B, a clock generator is similar to the clock generator shown in Figure 9A, and it further comprises a plurality of clock generators 225A, 225B,..., and 225N for the use of basic clocks. The clock generator receives the output of envelope detector 60, and compares the integrated signal of integrator 200 with the unintegrated signal by means of comparator 205. The compared result is converted into parallel data by using a serial-to-parallel converter 215. This data is compared with each reference value of a plurality of comparators 220A through 220N, and thereby the operation of the corresponding clock generator among clock generators 225A through 225N is enabled by output H of the comparator when the compared values become equal.

By this principle, if an envelope value is greater than the reference value, the rate of data recording is increased, so that a faster clock generator is operated. Also, for the contrary case, a slower clock generator is operated, and thereby the optimum clock can be found.

As described above, the envelope value is checked from the recording signal which is reproduced simultaneously while the signal is being recorded. Thus, the current clock rate is changed to the optimum clock signal, and the quantity of data output from memory 50 and the modulating clock of modulator 20 are controlled. Therefore, the data can be recorded on the recording medium in an optimum state.

Next, an optimum reproducing operation for the recorded data of the recording medium will be described with reference to Figure 8B.

The data reproduced by reproducing heads R1 and R2 is amplified to create signals which are greater than the predetermined magnitude, using a second amplifier 27. According to the control signal of microcomputer (not shown), switch 55 is switched to node L. When switch 55 switches to node L, the amplified signal from second amplifier 27 is input to an equalizer 70, so as to compensate for the degradation of frequency characteristics and the like. The output of equalizer 70 is input to a detector 75, and the output of the detector is input to a phase-locked loop (PLL) 80 wherein the reproducing clock included in the data signal is detected.

The detected clock signal is supplied to demodulator 30 and memory 50. The data reproduced according to the clock signal is demodulated by demodulator 30, so as to be recorded in memory 50. The data recorded in memory 50 is reproduced at an optimum state according to the clock signal provided by PLL 80.

Recording can be performed at the optimum bit recording rate, by the above-described construction. While the recorded signal is reproduced, the reproduction of signal is performed according to the reproducing clock which is included in the signal, which thereby enables the optimum reproduction.

Figures 10A and 10B are schematic block diagrams illustrating another embodiment of the optimum recording and/or reproducing apparatus according to the present invention.

Figure 10A briefly shows a head which is applied to this embodiment of the invention. The same heads RW1 and RW2 are used for recording and/or reproducing, and supplementary heads OD1 and OD2 are used for performing the optimum recording and/or reproducing. Figure 10B is a schematic block diagram of the recording and/or reproducing circuit adopting the head of Figure 10A.

The recording and/or reproducing circuit of Figure 10B is similar to the apparatus shown in Figure 8. Accordingly, the same reference numerals are used for the same components of the apparatus of Figure 8, and the explanation for these is not repeated. The recording and/or reproducing apparatus of Figure 10, one of the embodiments of the present invention, uses the same heads for both recording and reproduction. Therefore, a slight difference in the signal processing exists which will be described in more detail hereinbelow.

Firstly, an embodiment for performing the data recording at an optimum state is described.

The apparatus of Figure 10B has supplementary recording detection heads OD1 and OD2 for performing the optimum recording and/or reproducing operation, since it performs recording and reproduction by using the same heads RW1 and RW2. The input digital data signal is recorded in memory 50, and the data recorded in memory 50 is output according to the predetermined reference clock rate of clock generator 65. Next, the output data from memory 50 is modulated by modulator 20, and then amplified to the predetermined magnitude by first amplifier 25, so as to be recorded in the recording medium.

The data is recorded on the recording medium as described above, and simultaneously the recorded data is reproduced and output by optimum recording reproducing heads OD1 and OD2. The output data is amplified by second amplifier 27, and then by the connection of switch 55 according to the switching control signal of the microcomputer, the amplified signal is applied to envelope detector 60, and thereby the envelope value is detected. According to the magnitude of the detected value, the clock rate of clock generator 65 is determined, and then the corresponding clock signal is supplied to memory 50. Thus, the quantity of the recording signal to be output from memory 50 is controlled, and thereby the optimum recording operation can be performed.

The reproduction operation of this apparatus is identical with that of Figure 8B, except for the change of signal flow due to the switching operation of switch 55. Thus, further explanation thereof will be omitted.

Figure 11 shows another embodiment of an optimum recording and/or reproduction apparatus according to the present invention, and refers to an optimum recording and/or reproduction apparatus for controlling data compression ratio and performing error correction and modulation, etc.

Referring to Figure 11, the same components as those of the above-described embodiments are denoted by the same reference numerals, and thus a detailed description of the corresponding components is not repeated. In Figure 11, reference numeral 85 denotes a data compressor for compressing the data by a predetermined compression ratio using the conventional compression method, 90 denotes a mixer for mixing the compressed signal with the identification signal generated from identification (ID) generator 100 which is described hereinbelow, 95 denotes an error correction code (ECC) encoder, 100 denotes an ID generator, 105 denotes a recording controller for controlling the compression ratio for the signal to be recorded and the error correction, 110 denotes a second switch for switching according to the switching control signal, 115 denotes an ECC decoder, 120 denotes an ID detector for detecting ID signal from the reproduced signal, and 125 denotes a data expander for expanding the compressed data.

The operation in this embodiment comprised as above is described hereinbelow. Here, the recording head is the same as the reproducing head, and the optimum recording detection head is supplemented, additionally.

The data which is converted to a form of a digital data by the analog/digital conversion of an analog-to-digital converter (not shown) is input to data compressor 85, and then the input data is compressed according to the predetermined reference data compression ratio from recording controller 105 by using a conventional compression method. The compressed data goes through ECC encoder 95 for performing the reference correction, and is then modulated by modulator 20 according to the reference clock. Thereafter, the modulated signal is amplified by first amplifier 25 and is transferred to recording heads RW1 and RW2, to be recorded in the recording medium.

The recorded signal is immediately reproduced by using the optimum recording detection heads OD1 and OD2 while the data is recorded. During recording operation, the microcomputer transfers the corresponding switching control signal to first and second switches 55 and 110, by recognizing that the recording is being performed. The switching control signal from the microcomputer is set to a high state (H) while recording and set to a low state (L) while reproducing, respectively. Therefore, during recording, the switching control signal is applied to second switch 100, and thereby switch is connected to node L, and the reproduced signal is input to second amplifier 27, which leads to a digital signal which is greater than the predetermined magnitude. Moreover, the switching control signal is applied to first switch 55; therefore the switch turns to the low node.

When first switch 55 switches to node L according to the switching control signal, the reproduced and amplified signal is input to envelope detector 60. Envelope detector 60 detects the envelope value of the input signal and forwards the value to recording controller 105. Record controller 105 determines recording rate, compression rate, etc. for the optimum recording according to the input signal, and the detailed construction of the record controller is to be described with reference to Figure 12.

The recording controller shown in Figure 12 comprises a clock generator 65 for generating the clock, an error counter 140 for counting the error flag output from ECC decoder 115 (Figure 11), compression ratio controller 145 for controlling the compression ratio, and an error correction controller 150. These components will be described with respect to their operation.

As described above, clock generator 65 controls the clock operation in accordance with the magnitude of envelope detected by envelope detector 60. That is, if the detected envelope value is greater than the reference value, a faster clock generator is operated, and otherwise, a slower clock generator is operated, so as to generate the optimum clock. Accordingly, the corresponding clock signal is output to modulator 20 and ID generator 100.

Error counter 140 receives the error flag from ECC decoder 115, and counts the number of corresponding flags, to output the count value. Therefore, error correction controller 150 controls the error correction capability according to the input count value and the clock signal of the clock generator. The control of the error correction capability which is carried by error correction controller 150 is described with reference to Figure 13, in which the inner section of the error correction controller is shown.

Error correction controller 150 of Figure 12 comprises comparator 155 and up/down counter 160. Comparator 155 compares the value counted and output from error counter 140 with the predetermined reference error of the system. The up/down counter 160 is operated according to the comparing result and is loaded with the number of reference parities. The number of reference parities functions as a reference value. In order words, as a comparing result of comparator 155, if the output of error counter 140 is greater than the number of reference errors allowed by the system, the output of the comparator goes high, and thereby the value of up/down counter 160 is increased. In the opposite case, the number is reduced so as to control the number of parities. An increase in the value of up/down counter 160 means that many errors are present, and that the number of parities should be increased so as to enhance the correction capability. A decrease in the value of up/down counter 160 means that too many parities exist, and that the number of parities should be decreased so as to reduce the error correction capability.

The parity-number output from error correction controller 150 is applied to ECC encoder 115, ID generator 100 and compression ratio controller 145, as shown in Figure 12. Also, compression ratio controller 145 (Figure 12) receives clock signal from clock generator 65 so as to determine the recording bit rate, and receives the parity number from the error correction controller so as to select the corresponding compression ratio. Compression controller 145 comprises comparator 155, inverter 157 and up/down counter 160. Comparator 155 compares the value output from error correction controller 150 with the predetermined parity number of the system. The inverter 157 inverts the comparing result of comparator. The up/down counter 160 is operated according to the inverted comparing result and disloaded with the reference compression data ratio. The value of the reference compression data ratio functions as a reference value. The determinations of the error correction and the data compression ratio are described in more detail with reference to Figure 15.

Figures 15A, 15B and 15C are diagrams showing the layout of an ID code and an example thereof. As shown in Figure 15A, the ID code is composed of the eight-bit recording bit rate, eight-bit error correction capability, eight-bit data compression ratio, and a plurality of bits defining a variety of information about the system. Here, in the remaining bits of the ID code are included information of audio/video classification, frames and tracks, data and parity classification, the permission or nonpermission of digital copying, etc.

The ID generating principle of this embodiment of the present invention is that firstly, a recording bit rate is determined by the basic clock, and is recorded and simultaneously reproduced by the optimum recording detection head. Secondly, the error flag output from ECC decoder 115 is received and the number of parities is increased or decreased according to the number of errors. Therefore, the data compression ratio is controlled so as to control the after-compression data rate to reach a final recording bit rate which is predetermined.

Hereinbelow, Figures 15B and 15C are described. Figure 15B exemplifies better high band characteristics than that of Figure 15C. When the error correction capability is set equal for the respective systems, the case of Figure 15C shows a smaller data compression ratio than that of Figure 15B and an enhanced data rate. Accordingly, the picture quality and the sound performance can be enhanced.

That is, if a system such as Figure 15C is furnished and recording and reproduction are performed by the fixed specifications as in Figure 15B, significantly degraded picture and sound are recorded and reproduced for the given system performance. On the contrary, if a system such as Figure 15B is furnished and recording and reproduction are performed by the fixed specifications as in Figure 15C, since the error correction capability and data compression ratio are fixed, degradation inevitably occurs in the high frequency range, and thus the picture and sound are recorded and reproduced very poorly.

Recording controller 105 (Figure 11) determines the optimum clock signal, compression ratio and recording rate, and thereby one synchronization block is formed as shown in Figure 16. The synchronization block comprises a synchronization signal N1, an ID signal N2, a data signal N3, and a parity signal N4. Almost always, the recording bit rate is firstly determined, then parity-number N4 for determining the error correction capability is determined, and finally compression rate N3 is determined. The compression ratio among the data signal is provided to data compressor 85, and thereby the input signal is compressed according to the predetermined method, to be output. Also, ID generator 100 (Figure 11) simultaneously receives information about the clock signal, compression ratio and error correction. Then, the signal output from ID generator 100 is mixed with the compressed signal of data compressor 85 so as to be output.

Referring to Figure 11, the parity value which corresponds to error-correction among the output signals of recording controller 105 is applied to ECC encoder 95, and simultaneously modulator 20 modulates the output of ECC encoder 95 to be suitable for the channel characteristics according to the clock signal from recording controller 105. Then, the modulated signal is amplified to the predetermined amplitude by first amplifier 25, and then is recorded.

During reproduction of signal, the second switch turns to the low node according to the switching control signal from the microcomputer, and thereby the reproduced signal is amplified to the predetermined amplitude by second amplifier 27, and then transferred to equalizer 70, detector 75, PLL 80 and demodulator 30 so as to be demodulated. ID detector 120 detects the error correction capability and the data compression ratio in the demodulated signal. The detected error correction capability and the data compression ratio control ECC decoder 115 and data expander 125, respectively.

During reproduction, the reproduced signal does not enter envelope detector 60, but enters equalizer 70 only. Then, reproduction is performed through the same process as described above except that the error flag of ECC decoder 115 does not enter recording controller 105.

Referring to Figure 17, the reproduced signal according to an embodiment of the present invention is illustrated. By performing optimum recording a uniform reproduction level and no shift peak can be obtained after reproducing and equalizing, so that a distinct picture and excellent sound quality can be assured.

By the optimum recording and/or reproducing operation, notwithstanding the difference of head, tape or set-performance, optimum recording can be performed in a fashion most suitable for the head, tape or set-performance, whereby the optimum picture and sound qualities can be enjoyed, and further the reliability of a user can be enhanced.

## Claims

1. An optimum recording and reproducing apparatus comprising a reproducing apparatus comprising a detector (75) for detecting a recorded signal from a signal; a phase-locked loop (PLL) circuit (80) for detecting a reproduced clock signal from the output signal of said detector (75); a demodulator (30) for demodulating detected data from said detector (75) according to the reproduction clock signal output from said PLL circuit (80), according to the channel characteristics; and a memory (50) for temporarily storing therein the data provided by said demodulator (30) and outputting the stored data according to the clock signal provided by said PLL circuit (80) in which the apparatus is for recording digital data on a predetermined recording medium by using a recording head and reproducing and outputting the recorded data by using a reproducing head, characterised by comprising:
a recording apparatus comprising a memory (50) for storing an input digital signal; a modulator (20) for modulating read-out data from said memory according to predetermined clock signal and channel characteristics, so as to be supplied to said recording head; envelope detecting means (60) for detecting an envelope value from the just recorded data signal reproduced by said reproducing head simultaneously while recording the data signal on a recording medium by using said recording head; and clock generating means (65) for generating a clock signal whose frequency varies according to the detected result from said envelope detecting means (60), whereby the rate of reading out of data from said memory (50) and the modulating clock signal applied to said modulator (20) are determined according to said clock signal; and
the signal from which said recorded signal is detected is reproduced by said reproducing head.

2. An optimum recording and reproducing apparatus as claimed in claim 1, further comprising switching means (55) for switching the reproduction output via said reproducing head to said recording apparatus or said reproducing apparatus according to a data recording operation or a data reproducing operation.

3. An optimum recording and reproducing apparatus comprising a reproducing apparatus comprising a detector (75) for detecting a recorded signal from a reproduction signal which is reproduced by said reproducing head; a PLL circuit (80) for detecting a reproduced clock signal from the signal output from said detector (75); a demodulator (30) for demodulating the data detected by said detector (75) according to channel characteristics, according to the reproducing clock signal output from said PLL circuit (80) in which the apparatus is for recording digital data on a predetermined recording medium by using a recording head, and reproducing the recorded data by using a reproducing head, the apparatus characterised by comprising:
a recording apparatus comprising a data compressor (85) for compressing the data to be recorded by a predetermined compression ratio; an error correction encoder (95) for detecting the error of said compressed data, to thereby perform error-correction according to a predetermined error correction capability; a modulator (20) for modulating said error-corrected data according to predetermined clock and channel characteristics, to be supplied to the reproducing head; envelope detecting means (60) for detecting an envelope value from the just recorded data signal reproduced by using said reproducing head simultaneously while recording the data signal on a recording medium by using said recording head; recording controlling means (105) for determining reference clock, error correction capability and data compression ratio which are to be supplied to said modulator (20), said data compressor (85) and said error correction encoder (95), according to the detected result from said envelope detecting means (60) and an error flag produced by said error correction decoder (115); an identification (ID) generator (100) for receiving information from said recording controlling means (105) so as to be recorded in the input data; and a mixer (90) for mixing the ID signal from said ID generator (100) with the data from said data compressor (85), to thereby produce a mixing result to said error correction encoder (95); and
an ID detector (120) for detecting the ID signal from among said demodulated data; an error correction decoder (115) for performing error-correction-decoding according to said detected ID signal from said ID detector (120); and a data expander (125) for expanding the decoded signal by a predetermined expansion ratio which corresponds to the ID signal detected from said ID detector (120).

4. An optimum recording and reproducing apparatus as claimed in claim 1, 2 or 3, further comprising a supplementary recording signal detecting head for recording the data signal and simultaneously detecting the recorded data.

5. The optimum recording and reproducing apparatus as claimed in any of the preceding claims, wherein said envelope detecting means (60) produces an envelope value corresponding to the absolute value of difference between the upper and lower limits of the data read out and transferred by said reproducing head during recording.

6. An optimum recording and reproducing apparatus as claimed in claim 3, 4 or 5, wherein said recording controlling means (105) comprises clock generating means (65) for generating a clock signal whose frequency varies according to the compared result from said envelope detecting means (60); an error counter (140) for counting the error flags from said error correction decoder (115); an error correction controller (150) for receiving the clock signal from said clock generating means (65) and the error count value from said error counter (140), to thereby control the error correction capability; and a compression ratio controller (145) for controlling the compression ratio according to the clock signal from said clock generating means (65) and the error correction capability set by said error correction controller (150).

7. An optimum recording and reproducing apparatus as claimed in claim 1, claim 2, claims 1 and 4, claims 1 and 5 or claim 6, wherein said clock generating means (65) comprises an integrator (200) for integrating the detected output from said envelope detecting means (60); a comparator (205) for comparing the detected output from said envelope detecting means (60) with the integrated output from said integrator (200); and a voltage controlled oscillator (210) for producing a clock signal which is varied with the compared result output from said comparator (205).

8. An optimum recording and reproducing apparatus as claimed in claim 1, claim 2, claims 1 and 4, claims 1 and 5 or claim 6, wherein said clock generating means (65) comprises an integrator (200) for integrating the output detected from said envelope detecting means (60); a comparator (205) for comparing the detected output from said envelope detecting means (60) with the integrated output from said integrator (200); a serial-to-parallel converter (215) for converting the output of said comparator (205) into parallel data; a plurality of comparators (220A through 220N) for comparing the data constituting said parallel data with said predetermined reference values, respectively; and a plurality of clock generators (225A through 225N) for generating the clock signal according to said compared result.

9. An optimum recording and reproducing apparatus as claimed in claim 6, 7 or 8, wherein said error correction controller (150) comprises a comparator (155) for comparing the count value of said error counter (140) with said predetermined reference value; and an up/down counter (160) for up/down-counting a predetermined reference parity value according to said compared result.

10. An optimum recording and reproducing apparatus as claimed in claim 6, 7, 8 or 9, wherein said compression ratio controller (145) comprises a comparator (155) for comparing the value of said error correction controller (150) with said predetermined reference value; and an up/down counter (160) for up/down-counting a predetermined reference compression ratio in inverse proportion to said compared result.

## Patentansprüche

1. Ein Optimalaufzeichnungs- und/-Wiedergabegerät, das umfaßt eine Wiedergabevorrichtung mit einer Erfassungseinnchtung (75) zur Erfassung eines aufgezeichneten Signals von einem Signal; einer Phasenregelschaltung (PLL) (80) zur Bestimmung eines von dem Ausgangssignal der genannten Erfassungseinrichtung (75) wiedergegebenen Taktsignals; einem Demodulator (30) zur Demodulation, gemäß den Kanaleigenschaften von, von der genannten Erfassungseinrichtung (75) erfaßten Daten, gemäß dem Wiedergabetaktsignal, das von der genannten PLL Schaltung (80) ausgegeben wird; und einem Speicher (50) zur vorübergehenden Speicherung der Daten darin, die von dem genannten Demodulator (30) bereitgestellt werden, und zum Ausgeben der gespeicherten Daten gemäß dem Taktsignal, das durch die genannte PLL Schaltung (80) bereitgestellt wird, wobei die Vorrichtung zur Aufzeichnung digitaler Daten auf einem vorbestimmten Aufzeichnungsmedium unter Verwendung eines Aufzeichnungskopfes und zum Wiedergeben und Ausgeben der aufgezeichneten Daten unter Verwendung eines Wiedergabekopfes ist; **gekennzeichnet durch**
eine Aufzeichnungsvorrichtung, die umfaßt einen Speicher (50) zum Speichem eines digitalen Eingangssignals; einen Modulator (20) zum Modulieren von aus dem genannten Speicher ausgelesenen Daten gemäß einem vorbestimmten Taktsignal und Kanaleigenschaften, so wie sie dem genannten Aufzeichnungskopf zugeführt werden sollen; eine Hüllkurvenbestimmungseinrichtung (60) zum Bestimmen eines Hüllkurvenwerts von dem gerade aufgezeichneten Datensignal, das von dem genannten Wiedergabekopf gleichzeitig während des Aufzeichnens des Datensignals auf einem Aufzeichnungsmedium unter Verwendung des genannten Aufzeichnungskopfs aufgezeichnet wird; und eine Takterzeugungseinrichtung (65) zum Erzeugen eines Taktsignals, dessen Frequenz sich gemäß dem von der genannten Hüllkurvenbestimmungseinrichtung (60) bestimmten Ergebnis ändert, wobei die Rate des Auslesens von Daten aus dem genannten Speicher (50) und das Modulationstaktsignal, das an den genannten Modulator (20) angelegt wird, gemäß dem genannten Taktsignal bestimmt werden; und
das Signal, von dem das genannte aufgezeichnete Signal erfaßt wird, durch den genannten Wiedergabekopf wiedergegeben wird.

2. Ein Optimalaufzeichnungs- und/Wiedergabegerät, wie in Anpruch 1 beansprucht, das des weiteren eine Schalteinrichtung (55) zum Schalten der über dem genannten Wiedergabekopf ausgegebenen Wiedergabe zu der genannten Aufzeichnungsvorrichtung oder der genannten Wiedergabevorrichtung gemäß einem Datenaufzeichnungsvorgang oder einem Datenwiedergabevorgang umfaßt.

3. Ein Optimalaufzeichnungs- und/-Wiedergabegerät, das eine Wiedergabevorrichtung umfaßt mit einer Erfassungseinrichtung (75) zum Erfassen eines aufgezeichneten Signals von einem Wiedergabesignal, das durch den genannten Wiedergabekopf wiedergegeben wird; einer (PLL) (80) zur Bestimmung eines wiedergegebenen Taktsignals von dem Signalausgang der genannten Erfassungseinrichtung (75); einem Demodulator (30) zur Demodulation, gemäß dem Wiedergabataktsignal, das von der genannten PLL Schaltung (80) ausgegeben wird, der von der genannten Erfassungseinrichtung (75) erfaßten Daten gemäß Kanaleigenschaften, wobei die Vorrichtung zum Aufzeichnen digitaler Daten auf einem vorbestimmten Aufzeichnungsmedium unter Verwendung eines Aufzeichnungskopfes und zur Wiedergabe der aufgezeichneten Daten unter Verwendung eines Wiedergabekopfes ist, wobei das Gerät gekennzeichnet ist, das es umfaßt:
eine Aufzeichnungsvorrichtung, die aufweist einen Datenverdichter (85) zum Verdichten der aufzuzeichnenden Daten mit einem vorbestimmten Verdichtungsverhältnis; einen Fehlerkorrekturcodierer (95) zur Bestimmung des Fehlers der genannten verdichteten Daten, um dadurch eine Fehlerkorrektur gemäß einer vorbestimmten Fehlerkorrekturmöglichkeit auszuführen; einen Modulator (20) zum Modulieren der genannten fehlerkorrigierten Daten gemäß vorbestimmten Takt- und Kanaleigenschaften, die dem Wiedergabekopf zugeführt werden sollen; eine Hüllkurvenbestimmungseinrichtung (60) zum Bestimmen eines Hüllkurvenwerts von dem gerade aufgezeichneten Datensignal, das unter Verwendung des genannten Wiedergabekopfs gleichzeitig während des Aufzeichnens des Datensignals auf ein Aufzeichnungsmedium unter Verwendung des genannten Aufzeichnungskopfes wiedergegeben wird; eine Aufzeichnungssteuereinrichtung (105) zum Bestimmen eines Bezugstakts, einer Fehlerkorrekturmöglichkeit und eines Datenverdichtungsverhältnisses, die dem genannten Modulator (20), dem genannten Datenverdichter (85) und dern genannten Fehlerkorrekturcodierer (95) gemäß dem von der genannten Hüllkurvenbestimmungseinrichtung (60) bestimmten Ergebnis und einem Fehlermerker zugeführt werden sollen, der von dem genannten Fehlerkorrekturdecodierer (115) erzeugt wird; einen Kennungsgenerator (ID) (100) zum Erhalten von Informationen von der genannten Aufzeichnungssteuereinrichtung (105), so daß sie den Eingangsdaten aufgezeichnet werden; und einen Mischer (90) zum Mischen des ID Signals (Kennungssignals) von dem genannten ID Generator (100) mit den Daten von dem genannten Datenverdichter (85), um dadurch ein Mischergebnis für den genannten Fehlerkorrekturcodierer (95) zu erzeugen; und
eine ID Bestimmungseinrichtung (120) zur Bestimmung des ID Signals von den demodulierten Daten; einen Fehlerkorrekturdecodierer (115) zur Ausführung einer Fehlerkorrektur-Decodierung gemäß dem genannten bestimmten ID Signals von der genannten ID Bestimmungseinrichtung (120); und einen Datendehner (125) zum Dehnen des decodierten Signals mit einem vorbestimmten Dehnungsverhältnis, das dem ID Signal entspricht, das von der genannten ID Bestimmungseinrichtung (120) bestimmt worden ist.

4. Ein optimal Aufzeichnungs- und/-Wiedergabegerät wie in Anspruch 1, 2 oder 3 beansprucht, das des weiteren einen zusätzlichen Aufzeichnungssignalerfassungskopf zur Aufzeichnung des Datensignals und gleichzeitigen Erfassen der aufgezeichneten Daten umfaßt.

5. Ein Optimalaufzeichnungs- und/-Wiedergabegerät wie in irgendeinem der vorhergehenden Ansprüche beansprucht, wobei die genannte Hüllkurvenbestimmungseinrichtung (60) einen Hüllkurvenwert erzeugt, der dem Absolutwert der Differenz zwischen der oberen und unteren Grenze der während des Aufzeichnens durch den genannten Wiedergabekopf ausgelesenen und übertragenen Daten entspricht.

6. Ein Optimalaufzeichnungs- und/-Wiedergabegerät wie in Anspruch 3, 4 oder 5 beansprucht, wobei die genannte Autzeichnungssteuereinrichtung (105) eine Takterzeugungseinrichtung (65) zur Erzeugung eines Taktsignals umfaßt, dessen Frequenz sich gemäß dem Vergleichsergebnis von der genannten Hüllkurvenbestimmungseinrichtung (60) ändert; einen Fehlerzähler (140) zum Zählen der Fehlermerker von dem genannten Fehlerkorrekturdecodierer (115); eine Fehlerkorrektursteuerschaltung (150) zum Erhalten des Taktsignals von der genannten Takterzeugungseinrichtung (65) und des Fehlerzählwerts von dem genannten Fehlerzähler (140), um dadurch die Fehlerkorrekturmöglichkeit zu steuern; und eine Verdichtungsverhältnissteuerschaltung (145) zum Steuem des Verdichtungsverhältnisses gemäß dem Taktsignal von der genannten Takterzeugungseinrichtung (65) und der Fehlerkorrekturmöglichkeit, die von der genannten Fehlerkorrektursteuerschaltung (150) gesetzt ist.

7. Ein Optimalaufzeichnungs- und/-Wiedergabegerät wie in Anspruch 1, Anspruch 2, den Ansprüchen 1 und 4, den Ansprüchen 1 und 5 oder Anspruch 6 beansprucht ist, wobei die genannte Takterzeugungseinrichtung (65) eine Integrationseinrichtung (200) zum Integrieren des von der genannten Hüllkurvenbestimmungseinrichtung (60) bestimmten Ausgangs umfaßt; einen Vergleicher (205) zum Vergleichen von der genannten Hüllkurvenbestimmungseinrichtung (60) des bestimmten Ausgangs mit dem integrierten Ausgang von der genannten Integrationseinrichtung (200); und einen spannungsgesteuerten Oszillator (210) zur Erzeugung eines Taktsignals, das mit dem Vergleichsergebnis geändert wird, das von dem genannten Vergleicher (205)ausgegeben wird.

8. Ein Optimalaufzeichnungs- und/-Wiedergabegerät wie in Anspruch 1, Anspruch 2, den Ansprüchen 1 und 4, den Ansprüchen 1 und 5 oder Anspruch 6 beansprucht ist, wobei die genannte Takterzeugungseinrichtung (65) eine Integrationseinrichtung zum Integrieren des von der genannten Hüllkurvenbestimmungseinrichtung (60) bestimmten Ausgangs umfaßt; einen Vergleicher (205) zum Vergleichen des bestimmten Ausgangs von der genannten Hüllkurvenbestimmungseinrichtung (60) mit dem integrierten Ausgang von der genannten Integrationseinrichtung (200); einen Seriell/Parallel-Wandler (215) zum Umwandeln des Ausgangs des genannten Vergleichers (205) in parallele Daten; eine Mehrzahl Vergleicher (220A bis 220N) zum Vergleichen der Daten, die die genannten parallelen Daten bilden, jeweils mit den genannten vorbestimmten Bezugswerten; und eine Mehrzahl Taktgeneratoren (225A bis 225N) zur Erzeugung des Taktsignals gemäß dem genannten Vergleichsergebnis.

9. Ein Optimalaufzeichnungs- und/-Wiedergabegerät wie in Anspruch 6, 7 oder 8 beansprucht, wobei die genannte Fehlerkorrektursteuerschaltung (150) einen Vergleicher (155) zum Vergleichen des Zählwerts des genannten Fehlerzählers (140) mit dem genannten vorbestimmten Bezugswert umfaßt; und einen Vorwärts/Rückwärtszähler (160) zum Vorwärts/Rückwärtszählen eines vorbestimmten Bezugspantätswerts gemäß dem genannten Vergleichsergebnis.

10. Ein optimal Aufzeichnungs- und/-Wiedergabegerät wie in Anspruch 6, 7, 8 oder 9 beansprucht, wobei die genannte Verdichtungsverhältnissteuerschaltung (145) einen Vergleicher (155) zum Vergleichen des Werts der genannten Fehlerkorrektursteuerschaltung (150) mit dem genannten vorbestimmten Bezugswert umfaßt; und einen Vorwärts/Rückwärtszähler (160) zum Vorwärts/Rückwärtszählen eines vorbestimmten Bezugsverdichtungsverhältnis im umgekehrten Verhältnis zu dem genannten Vergleichsergebnis.

## Revendications

1. Dispositif d'enregistrement et de reproduction optimal comprenant un dispositif de reproduction comportant un détecteur (75) destiné à détecter un signal enregistré à partir d'un signal ; un circuit de boucle à asservissement de phase (PLL) (80) destiné à détecter un signal d'horloge reproduit à partir du signal de sortie dudit détecteur (75) ; un démodulateur (30) destiné à démoduler les données détectées par ledit détecteur (75) en fonction du signal d'horloge de reproduction produit par ledit circuit PLL (80), en fonction des caractéristiques du canal ; et une mémoire (50) destinée au stockage temporaire des données produites par ledit démodulateur (30) et à la sortie des données stockées en fonction du signal d'horloge produit par ledit circuit PLL (80) dans lequel le dispositif sert à l'enregistrement de données numériques sur un support d'enregistrement prédéterminé a l'aide d'une tête d'enregistrement et à la reproduction et à la sortie des données enregistrées à l'aide d'une tête de reproduction, caractérisé en ce qu'il comporte :
un dispositif d'enregistrement comprenant une mémoire (50) destinée au stockage d'un signal numérique d'entrée ; un modulateur (20) destiné à moduler les données extraites de ladite mémoire en fonction du signal d'horloge prédéterminé et des caractéristiques du canal, pour être appliquées à ladite tête d'enregistrement ; d'un moyen de détection d'enveloppe (60) destiné à détecter une valeur d'enveloppe dans le signal de données qui vient d'être enregistré reproduit par ladite tête de reproduction simultanément à l'enregistrement des données de signal sur un support d'enregistrement à l'aide de ladite tête d'enregistrement ; et un moyen de génération d'horloge (65) destiné à générer un signal d'horloge dont la fréquence varie en fonction du résultat détecté par ledit moyen de détection d'enveloppe (60), ce par quoi le débit d'extraction des données de ladite mémoire (50) et le signal d'horloge de modulation appliqué audit modulateur (20) sont déterminés en fonction dudit signal d'horloge ; et
le signal à partir duquel ledit signal enregistré est détecté est reproduit par ladite tête de reproduction.

2. Dispositif d'enregistrement et de reproduction optimal selon la revendication 1, comprenant en outre un moyen de commutation (55) destiné à commuter la sortie de reproduction par le biais de la tête de reproduction sur ledit dispositif d'enregistrement ou ledit dispositif de reproduction en fonction d'une opération d'enregistrement de données ou d'une opération de reproduction de données.

3. Dispositif d'enregistrement et de reproduction optimal comprenant un dispositif de reproduction comportant un détecteur (75) destiné à détecter un signal enregistré à partir d'un signal de reproduction reproduit par ladite tête de reproduction ; un circuit PLL (80) destiné à détecter un signal d'horloge reproduit à partir du signal de sortie dudit détecteur (75) ; un démodulateur (30) destiné à démoduler les données détectées par ledit détecteur (75) en fonction du signal d'horloge de reproduction produit par ledit circuit PLL (80), en fonction des caractéristiques du canal, en fonction du signal d'horloge de reproduction produit par ledit circuit PLL (80) dans lequel le dispositif sert à l'enregistrement de données numériques sur un support d'enregistrement prédéterminé à l'aide d'une tête d'enregistrement, et à la reproduction des données enregistrées à l'aide d'une tête de reproduction, le dispositif étant caractérisé en ce qu'il comporte :
un dispositif d'enregistrement comprenant un compresseur de données (85) destiné à compresser les données à enregistrer selon un taux de compression prédéterminé ; un codeur à correction d'erreurs (95) destiné à détecter les erreurs desdites données compressées, afin de permettre une correction d'erreurs en fonction d'une capacité de correction d'erreurs prédéterminée ; un modulateur (20) destiné à moduler lesdites données à erreurs corrigées en fonction d'une horloge prédéterminée et des caractéristiques d'un canal, afin de les appliquer à la tête de reproduction ; un moyen de détection d'enveloppe (60) destiné à détecter une valeur d'enveloppe dans le signal de données qui vient d'être enregistré en utilisant ladite tête de reproduction simultanément à l'enregistrement du signal de données sur un support d'enregistrement en utilisant ladite tête d'enregistrement ; un moyen de contrôle d'enregistrement (105) destiné à déterminer une horloge de référence, une capacité de correction d'erreurs et un taux de compression de données qui doivent être appliqués audit modulateur (20), audit compresseur de données (85) et audit codeur de correction d'erreurs (95), en fonction du résultat détecté par ledit moyen de détection d'enveloppe (60) et d'un indicateur d'erreurs produit par ledit décodeur de correction d'erreurs (115); un générateur de code d'identification (100) destiné à recevoir des informations à partir dudit moyen de contrôle d'enregistrement (105) de manière à l'enregistrer avec les données d'entrée ; et un mélangeur (90) destiné à mélanger le signal d'identification produit par ledit générateur de code d'identification (100) avec les données provenant dudit compresseur de données (85), afin de produire un résultat combiné appliqué audit codeur de correction d'erreurs (95) ; et
un détecteur de code d'identification (120) destiné à détecter le signal d'identification parmi lesdites données démodulées ; un décodeur de correction d'erreurs (115) destiné à effectuer les opérations de correction d'erreurs-décodage en fonction dudit signal d'identification détecté par ledit détecteur d'identification (120) ; et un expanseur de données (125) destiné à expanser le signal décodé selon un taux d'expansion prédéterminé correspondant au signal d'identification détecté par ledit détecteur de code d'identification (120).

4. Dispositif d'enregistrement et de reproduction optimal selon la revendication 1, 2 ou 3, comprenant en outre une tête de détection de signal d'enregistrement supplémentaire destinée à enregistrer le signal de données et à détecter simultanément les données enregistrées.

5. Dispositif d'enregistrement et de reproduction optimal selon l'une quelconque des revendications précédentes, dans lequel ledit moyen de détection d'enveloppe (60) produit une valeur d'enveloppe correspondant à la valeur absolue de la différence entre les limites supérieure et inférieure des données extraites et transférées par ladite tête de reproduction en cours d'enregistrement.

6. Dispositif d'enregistrement et de reproduction optimal selon la revendication 3, 4 ou 5, dans lequel ledit moyen de contrôle d'enregistrement (105) comporte un moyen de génération d'horloge (65) destiné à générer un signal d'horloge dont la fréquence varie en fonction du résultat comparé dudit moyen de détection d'enveloppe (60) ; un compteur d'erreurs (140) destiné à compter les indicateurs d'erreurs dudit décodeur de correction d'erreurs (115) ; un contrôleur de correction d'erreurs (150) destiné à recevoir le signal d'horloge dudit moyen de génération d'horloge (65) et la valeur de comptage d'erreurs dudit compteur d'erreurs (140) afin de contrôler les capacités de correction d'erreurs ; et un contrôleur de taux de compression (145) destiné à contrôler le taux de compression en fonction du signal d'horloge dudit moyen de génération d'horloge (65) et des capacités de correction d'erreurs établies par ledit contrôleur de correction d'erreurs (150).

7. Dispositif d'enregistrement et de reproduction optimal selon la revendication 1, la revendication 2, les revendications 1 et 4, les revendications 1 et 5 ou la revendication 6, dans lequel ledit moyen de génération d'horloge (65) comprend un intégrateur (200) destiné à intégrer la sortie détectée dudit moyen de détection d'enveloppe (60) ; un comparateur (205) destiné à comparer la sortie détectée dudit moyen de détection d'enveloppe (60) et la sortie intégrée dudit intégrateur (200) ; et un oscillateur à commande en tension (210) destiné à produire un signal d'horloge variable en fonction du résultat comparé dudit comparateur (205).

8. Dispositif d'enregistrement et de reproduction optimal selon la revendication 1, le revendication 2, les revendications 1 et 4, les revendications 1 et 5 ou la revendication 6, dans lequel ledit moyen de génération d'horloge (65) comporte un intégrateur (200) destiné à intégrer la sortie détectée par ledit moyen de détection d'enveloppe (60) ; un comparateur (205) destiné à comparer la sortie détectée par ledit moyen de détection d'enveloppe (60) avec la sortie intégrée dudit intégrateur (200) ; un convertisseur série-parallèle (215) destiné à convertir la sortie dudit comparateur (205) en données en parallèle ; une pluralité de comparateurs (220A à 220N) destinés à comparer les données composant lesdites données en parallèle avec des valeurs de référence prédéterminées, respectivement ; et une pluralité de générateurs d'horloge (225A à 225N) destinés à générer le signal d'horloge en fonction dudit résultat de la comparaison.

9. Dispositif d'enregistrement et de reproduction optimal selon la revendication 6, 7 ou 8, dans lequel ledit contrôleur de correction d'erreurs (150) comprend un comparateur (155) destiné à comparer la valeur de comptage dudit compteur d'erreurs (140) avec ladite valeur de référence prédéterminée ; et un compteur/décompteur (160) destiné à compter/décompter une valeur de parité prédéterminée en fonction dudit résultat de la comparaison.

10. Dispositif d'enregistrement et de reproduction optimal selon la revendication 6, 7, 8 ou 9, dans lequel ledit contrôleur de taux de compression (145) comporte un comparateur (155) destiné à comparer la valeur dudit contrôleur de correction d'erreurs (150) avec ladite valeur de référence prédéterminée ; et un compteur/décompteur (160) destiné au comptage/décomptage d'un taux de compression de référence prédéterminé en proportion inverse dudit résultat de comparaison.
